Europäisches Patentamt

European Patent Office

Office européen des brevets

(11) Veröffentlichungsnummer: **0 456 897 A1**

## (12) EUROPÄISCHE PATENTANMELDUNG

(21) Anmeldenummer: 90123451.8

(22) Anmeldetag: 06.12.90

(51) Int. Cl.5: **G01N 23/223**, G21K 1/06

(30) Priorität: 15.05.90 DE 4015608

(43) Veröffentlichungstag der Anmeldung:
**21.11.91 Patentblatt 91/47**

(84) Benannte Vertragsstaaten:
**DE FR GB NL**

(71) Anmelder: **SIEMENS AKTIENGESELLSCHAFT**
**Wittelsbacherplatz 2**
**W-8000 München 2(DE)**

(72) Erfinder: **Schuster, Manfred, Dr.**
**Endelhauser Strasse 9 A**
**W-8000 München 21(DE)**

(54) **Messanordnung für die Röntgenfluoreszenzanalyse.**

(57) Meßanordnung für die Röntgenfluoreszenzanalyse mit einer Röntgenstrahlung emittierenden Quelle (5), einer Reflektoreinheit (4) zur Umlenkung der Röntgenstrahlung (8) in Richtung einer auf einem Positioniertisch (18 bis 22) angeordneten Probe (9) und Mitteln (10, 11) zum Nachweis der durch die streifend auf die Probe (9) einfallende Röntgenstrahlung angeregte Fluoreszenzstrahlung (12).

Die Reflektoreinheit (4) besteht aus einer sich periodisch wiederholenden Folge von Schichten aus Materialien mit unterschiedlichem Brechungsindex.

FIG 1

EP 0 456 897 A1

Zur Bestimmung der chemischen Zusammensetzung von dünnen Schichten und Oberflächen sowie zur Messung der Tiefenverteilung von Elementen in Festkörpern, insbesondere Halbleitersubstraten, findet zunehmend die sogenannte Totalreflexions-Röntgenfluoreszenzanalyse (TRFA) Anwendung. Verglichen mit den konventionellen Verfahren der Röntgenanalyse besitzt die TRFA eine hohe Oberflächenempfindlichkeit, da die anregende Strahlung unter einem sehr kleinen Winkel $\alpha < 0,5°$ auf die Probe einfällt und somit nur wenige Nanometer in diese eindringt.

Die Fortschritte der Halbleitertechnologie machen es notwendig, die Meßgenauigkeit der TRFA ständig zu verbessern. Von besonderer Bedeutung ist hierbei die Steigerung der Nachweisempfindlichkeit für verschiedene Elemente, die bei Kontaminationsmessungen im Bereich kleiner $10^{11}$ Atome/$cm^2$ liegen sollte. Dies erfordert die Lösung folgender Probleme:

a) Die Energiedichte der anregenden Strahlung an der Probenoberfläche und damit die Intensität der emittierten Fluoreszenzstrahlung ist für einen Einfallswinkel

$$\alpha = \alpha_G =$$

konst. $\rho^{1/2}/E$ am größten, wobei

$$\alpha_G$$

den von der Proben- bzw. Substratdichte $\rho$ und der Photonenenergie $E$ abhängigen Grenzwinkel der Totalreflexion bezeichnet. Auch für kleinere Winkel

$$\alpha < \alpha_G$$

beobachtet man Totalreflexion, wobei die Energiedichte an der Oberfläche allerdings geringer ist. Bei größeren Einfallswinkeln

$$\alpha > \alpha_G$$

dringt die anregende Strahlung tief in die Probe ein, so daß es zu einem starken Anstieg des Untergrundes durch Streu- und Fluoreszenzbeiträge des Probeninneren kommt. Bei Anregung der Probe mit direkter Röntgenstrahlung ist man daher gewzungen, den Einfallswinkel $\alpha$ kleiner als

$$\alpha_G (E_{Max}) \quad (E_{Max} \quad : \quad =$$

maximale Photonenenergie der anregenden Röntgenstrahlung) zu wählen, um Totalreflexion für das gesamte Anregungsspektrum zu gewährleisten, obwohl die hochenergetischen Photonen keinen wesentlichen Beitrag zur Anregung der Fluoreszenzstrahlung liefern. So beträgt der Einfallswinkel beispielsweise $\alpha = 0,036°$, wenn man die anregende Strahlung in einer Röhre erzeugt, deren Anode auf einem Potential von 50 kV liegt. Aufgrund der kleinen Einfallswinkel $\alpha$ ist die Energiedichte der anregenden Strahlung und damit auch die Fluoreszenzintensität dann entsprechend gering.

b) Selbst wenn Totalreflexion stattfindet und die Strahlung nach Fresnel spiegelnd reflektiert wird, kommt es infolge der Wechselwirkung des zur Oberflächenwelle entarteten gebrochenen Strahls mit den Atomen der Oberfläche zur Emission von Fluoreszenzstrahlung sowie zur Streuung der primären Röntgenphotonen. Während die Fluoreszenzstrahlung das zu messende Signal liefert, erzeugt Rayleigh-, Compton- und Bragg- gestreute Primärstrahlung einen störenden Untergrund, der zur Verbesserung der Meßempfindlichkeit unterdrückt bzw. deutlich verringert werden muß.

c) Die Ein- und Austrittstiefe der Röntgenstrahlung hängt außer vom Probenmaterial auch vom Einfalls- bzw. Austrittswinkel und von der Photonenenergie ab. Die Variation des Einfallswinkels nahe dem Grenzwinkel der Totalreflexion ermöglicht eine kontinuierliche und genau berechenbare Änderung der Eindringtiefe im Bereich von wenigen Nanometern bis zu mehreren Mikrometern. Voraussetzung für einfache, analytisch beschreibbare Zusammenhänge ist die Verwendung monochromatischer Strahlung zur Anregung. Unter dieser Voraussetzung könnten Tiefenverteilungen von Elementen bzw. die Dicken und Dichten von Schichten einfacher Strukturen aus den Fluoreszenzsprektren bestimmt werden. Dies ist allerdings nur dann mit hoher Genauigkeit möglich, wenn man die Probe mit intensiver, monochromatischer und gut kollimierter Röntgenstrahlung anregt.

Zur Lösung dieser Probleme wurde in DE-A 27 36 960 und DE-A 29 11 596 vorgeschlagen, einen Einfach- bzw. Doppelreflexionsspiegel in einer TRFA-Meßanordnung zu verwenden, um den hochenergetischen Teil des Bremsstrahlungsspektrums einer Röntgenröhre bis hin zu den intensitätsstarken charakteristischen Linien durch Absorption zu unterdrücken und nur den niederenergetischen Teil des Spektrums nach dem Prinzip der Totalreflexion auf die Probe umzulenken. Diese Tiefpaßfilterung des Röntgenspektrums hat zur Folge, daß sich der Einfallswinkel in dem obengenannten Beispiel von $\alpha < 0,032$ ° auf $\alpha <$ 0,1 ° erhöht, falls man Photonen der Energie $E \geq E$ (Mo-K$\alpha$) ausblendet. Entsprechend größer ist dann auch die Energiedichte der anregenden Röntgenstrahlung auf der Probe.

Mit dieser Methode gelingt es allerdings nicht, den durch Compton- und Rayleigh - gestreute niederenergetische Photonen erzeugten Untergrund im Fluoreszenzspektrum zu reduzieren. Darüberhinaus ist die anregende Primärstrahlung nicht monochromatisch, so daß sie keine definierte Eindringtiefe besitzt.

Teilweise wurden die genannten Probleme auch mit einem sogenannten Röntgenbandpaß gelöst, der alle Strahlung beiderseits eines gewünschten Spektralbereichs ausblendet. Als Röntgenbandpaß finden insbesondere Kristallmonochromatoren sowie Kombinationen von Reflexions- und Transmissionsspiegeln Verwendung (s. beispielsweise DE-US 27 27 505).

Kristallmonochromatoren besitzen eine geringe integrale Reflektivität, so daß deren Einsatz in der TRFA die Verwendung einer intensiven Röntgenquelle, beispielsweise eines Synchrotrons oder eine Röhre mit Drehanode, erfordert. Ähnliche Probleme treten auf bei der Verwendung eines aus einer Kombination von Reflexion- und Transmissionsspiegeln bestehenden breitbandigen Monochromators, in dem viel Intensität durch Absorption im Transmissionsspiegel verlorengeht. Hinzu kommt eine aufwendige Mechanik, um die einzelnen Komponenten zueinander sowie zur Röntgenquelle und zur Probe auszurichten.

Der Erfindung liegt die Aufgabe zugrunde, eine mechanisch einfach aufgebaute Meßanordnung der eingangs genannten Art anzugeben, die eine Anregung der Probe mit monochromatischer Röntgenstrahlung hoher Intensität gewährleistet und Messungen mit großer Empfindlichkeit erlaubt. Außerdem soll eine Fokussierung, Kollimierung oder Parallelisierung der anregenden Röntgenstrahlung möglich sein. Diese Aufgaben werden erfindungsgemäß durch eine Meßanordnung mit den im Patentanspruch 1 angegebenen Merkmalen gelöst.

Der mit der Erfindung erzielbare Vorteil besteht insbesondere darin, daß man konventionelle Röntgenröhren als Strahlungsquelle verwenden kann. Außerdem wird die Nachweisempfindlichkeit aufgrund der Verringerung der Untergrundstrahlung deutlich verbessert.

Die abhängigen Ansprüche betreffen vorteilhafte Weiterbildungen der im folgenden anhand der Zeichnung näher erläuterten Erfindung. Hierbei zeigt:

Fig. 1    ein Ausführungsbeispiel der erfindunsgemäßen Meßanordnung

Fig. 2    eine Reflektoreinheit zur Monochromatisierung der die Probe anregenden Röntgenstrahlung

Fig. 3    zwei mit dem Verfahren der TRFA aufgenommene Fluoreszenzspektren einer kontaminierten Siliziumscheibe

Fig. 4    weitere Ausführungsbeispiele der erfindungsgemäßen Reflektoreinheit.

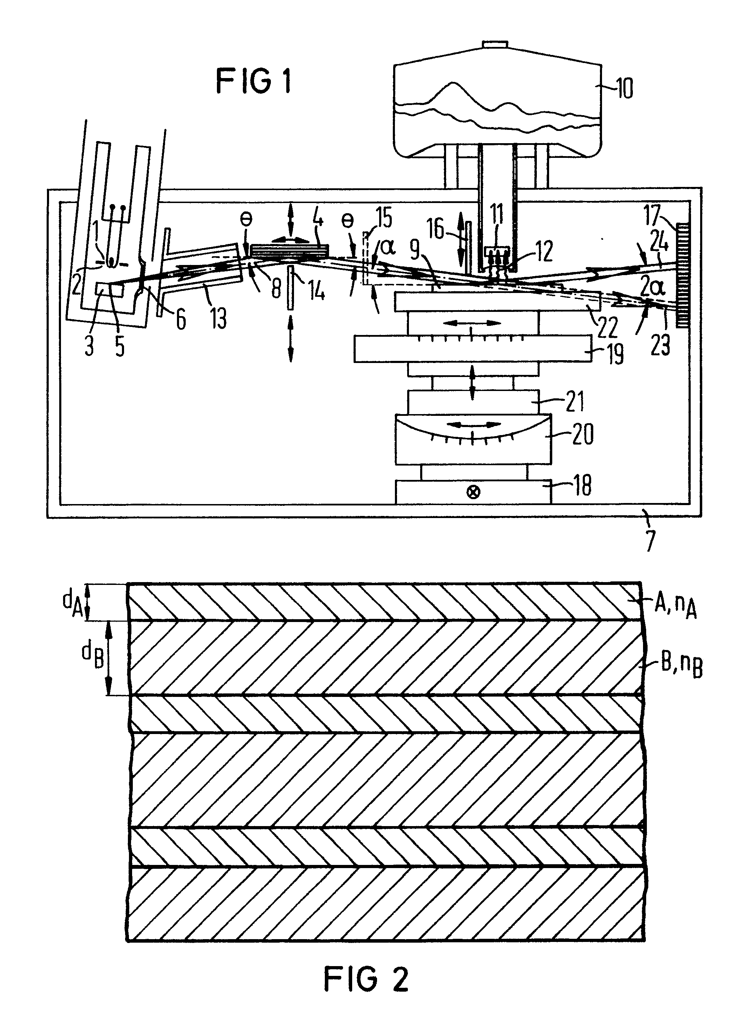

Wie die Fig. 1 schematisch zeigt, umfaßt die erfindungsgemäße Meßanordnung für die TRFA eine aus einer Glühkathode 1, einer Fokussierelektrode 2 und einer Anode 3 bestehende Röntgenröhre, eine höhen- und winkelverstellbare Reflektoreinheit 4 zur Umlenkung der in einem Punkt- oder Strichfokus 5 auf der Anode 3 erzeugten und durch das Röhrenfenster 6 in das evakuierte oder mit einem Gas (Luft, Helium) gefüllte Gehäuse 7 austretenden Röntgenstrahlung 8 in Richtung der Probe 9, sowie einen mit Hilfe des Kyrostaten 10 auf die Temperatur des flüssigen Stickstoffs gekühlten Si(Li)- oder Ge-Detektor 11, mit dem man die in oberflächennahen Schichten der Probe 9 angeregte Fluoreszenzstrahlung 12 nachweist. Weiterhin enthält die Meßanordnung eine Strahlabschirmung 13 und mehrere verstellbare Blenden 14, 15 und 16, die den Strahlquerschnitt in horizontaler und vertikaler Richtung begrenzen.

Das an der der Röntgenröhre gegenüberliegenden Gehäusewand befestigte Diodenarray (vorzugsweise PIN-Dioden) dient der Bestimmung des mit Hilfe des Positioniertisches 18 bis 22 vorgebbaren Einfallswinkels $\alpha$, der sich aus dem Versatz des direkten und des von der Probe 9 reflektierten Röntgenstrahls 23 bzw. 24 ergibt. Der Probentisch zur Ausrichtung der Probe 9 bezüglich des Reflektors 4 besteht im wesentlichen aus zwei Lineartischen 18 und 19 zur Verschiebung der Probe 9 in den durch die Pfeile angedeuteten Richtungen, einem sogenannten Chi-Kreis 20 zur Einstellung des Einfallswinkels $\alpha$, einem Hub-Tisch 21 zur Justierung der Probenoberfläche auf der Drehachse des Chi-Kreises 20 sowie einer pneumatischen Ansaugplatte 22 zur Halterung der Probe 9. Bei Messungen im evakuierten Gehäuse 7 wird die Ansaugplatte 22 vorzugsweise durch ein elektrostatisches Halterungselement ersetzt.

Als Reflektor bzw. Monochromator 4 ist in der erfindungsgemäßen Meßanordnung ein Vielschichtspiegel vorgesehen. Wie die Fig. 2 schematisch zeigt, besteht der Spiegel aus einer periodisch sich wiederholenden Folge von Schichten aus Materialien A und B mit unterschiedlichem Brechungsindex $n_A$ bzw. $n_B$, wobei die Anzahl N der Schichten innerhalb einer Periode der Bedingung $N \geq 2$ genügt. Diese Schichtfolgen werden vorzugsweise durch aufsputtern, aufdampfen oder aufwachsen der entsprechenden Materialien A bzw. B auf ein Substrat, beispielsweises einen Silizium-Wafer, hergestellt. Die Schichten selbst können hierbei amorph oder kristallin sein. Für einen aus einer periodischen Folge von zwei Schichten A und B bestehenden Spiegel 4 kommen hierbei insbesondere die Materialkombinationen A/B: = Mo/B$_4$C, Re/Si, Re/C, W/Si, W/C, Ta/Si, W/Be, Mo/Be, Mo/Si, Mo/C, Ni/C, Au/C, AuPd/C, ReW/B, ReW/C, Al/Be oder V/C in Betracht.

Da die Periodizitätslänge $d = d_A + d_B$ ($d_A$, $d_B$: Dicke der Schichten A bzw. B) sowie die Schichtdickenverhältnisse $d_A$: $d_B$ von Lagen mit hohem und niedrigem Brechungsindex $n_A$ bzw. $n_B$ frei vorgebbar sind, kann man die Eigenschaften des Reflektors bzw. Monochromators den Erfordernissen der TRFA anpassen.

Nach J.H. Underwood and T.W. Barbee (s. Proc. Topical Conf. on Low Energy X-Ray Diagnostics, Monterey, June 8-10, 1981, in AIP Conf. Proc., 75 (1981), S. 170 - 178) ergeben sich im Grenzfall eines unendlich dicken Vielschichtspiegels, fehlender Absorption und kleinen Beugungswinkeln $\Theta$ m für die Peakreflektivität $R_m^P$ , die integrale Reflektivität $R_m^I$ ,die Bandbreite

$$(\text{HWHM}) \Delta \Theta_m^{1/2}$$

und die relative Energiebandbreite $|\Delta E/E|_m$ des Reflexionsprofils die folgenden Abhängigkeiten:

$$R_m^P = 1 \qquad (1)$$

$$R_m^I = d \cdot \lambda \cdot (m^2 \pi)^{-1} \div (\Phi_A - \Phi_B) \cdot \sin \left\{ (m \cdot \pi \cdot d_A)/d \right\} \qquad (2)$$

$$\Delta \Theta_m^{1/2} = 2,3 \pi^{-1} \cdot R_m^I \qquad (3)$$

$$|\Delta E/E|_m = \Delta \Theta_m^{1/2} \cdot \cot \Theta_m \qquad (4)$$

mit $m \cdot \lambda = 2d \cdot \sin \Theta_m$ Bragg-Gesetz (5)
$d = d_A + d_B$ (6)

d: Periodizitätslänge,
$d_{A,B}$: Dicke der Schicht A bzw. B,
$\lambda$: Wellenlänge,
m: Beugungsordnung,
$\Theta_m$: Braggwinkel
$\Phi_{A,B}$: Streuamplitudendichte der Schicht A bzw. B, definiert durch
$\Phi = \gamma r_e ((Z + f')^2 + f''^2)^{1/2}$ (7)

$\gamma$: Atomdichte der Schicht
Z: Kernladungszahl der Schicht,
f': Dispersionskorrektur,
f'': Absorptionskorrektur,
$\rho$: Dichte,
$N_A$: Avogadrozahl,
$r_e$: klassischer Elektronenradius
A: relative Atommasse.

4

Zusammenhang mit dem Brechungsindex n:

$$n = 1 - \delta - i\beta \qquad (8)$$

$$\delta = \frac{N_A \cdot r_e \cdot \lambda^2 \cdot \varsigma}{2 \cdot \pi \cdot A} \cdot (Z + f') \qquad (9)$$

$$\beta = \frac{N_A \cdot r_e \cdot \lambda^2 \cdot \varsigma}{2 \cdot \pi \cdot A} \cdot f'' \qquad (10)$$

Wie man Gleichung (2) entnimmt, kann die integrale Reflektivität des Vielschichtspiegels durch eine große Periodizitätslänge d, einen großen Kontrast der Streuamplitudendichten bzw. der Brechungsindizes, die Messung in erster Beugungsordnung m = 1 und ein darauf abgestimmtes Schichtdickenverhältnis $d_A$: $d_B$ = 1:1 optimiert werden, wobei die Peakreflektivität mit ca. 90% der guter Einkristallmonochromatoren entspricht. Vielschichtspiegel besitzen eine wesentlich größere Bandbreite als Einkristallmonochromatoren. So berechnet sich die Bandbreite für einen mit Mo-Kα-Strahlung beaufschlagten Si (400)-Einkristall bei einem Bragg-Winkel von $\Theta_1$ = 15,16 ° zu

$$\Delta \Theta_1^{1/2} = 0,00048 \cdot$$

und die relative Energiebandbreite zu $|\Delta E/E|_1$ = 3,1 x 10 (-5) während ein Mo/B$_4$C Vielschichtspiegel mit $d_A$ = $d_B$ = 2,5 nm bei $\Theta_1$ = 0,41 ° eine Bandbreite von

$$\Delta \Theta_1^{1/2} = 0,02°$$

bzw. eine relative Energiebandbreite von $|\Delta E/E|_1$ = 4,9 x 10 (-2) aufweist. Die größere relative Energiebandbreite des Vielschichtspiegels hat zur Folge, daß dessen integrale Reflektivität die des Si (400)-Monochromators um den Faktor 1580 übertrifft. Bei Berücksichtigung der Absorption ergeben sich kleine Abweichungen zu den oben angegebenen Werten, so daß bei der Materialauswahl neben einer großen Differenz $\Phi_A$-$\Phi_B$ auch eine kleine Absorption in den Schichten A und B anzustreben ist.

Infolge Beugung höherer Ordnung kann der Vielschichtspiegel 4 auch unerwünschte, hochenergetische Anteile des primären Röhrenspektrums auf die Probe 9 reflektieren. Wird der Vielschichtspiegel 4 beispielsweise für die Mo-Kα-Linie mit der Energie $E_1$ = 17,5 keV auf die erste Beugungsordnung (m = 1) justiert, so besitzen die Photonen der Reflexe zweiter und dritter Ordnung eine Energie von $E_2$ = 35 keV bzw. $E_3$ = 52,5 keV. Wie sich aus Gleichung (2) herleitet, wird der Reflex zweiter Ordnung bei einem Schichtdickenverhältnis von $d_A$:$d_B$ = 1:1 vollständig ausgelöscht. Um auch den Reflex dritter Ordnung ($E_3$ = 52,5 keV) zu unterdrücken, kann man das Anregungsspektrum der Röntgenröhre durch Wahl des Anodenpotentials auf Energien E < 52,5 keV begrenzen.

Da niederenergetische Photonen selbst bei relativ großen Einfallswinkeln noch Totalreflexion erfahren, kann es vorkommen, daß der Vielschichtspiegel 4 den niederenergetischen Anteil des primären Röntgenspektrums in Richtung der Probe 9 umlenkt und damit einen unerwünschten Anstieg des Untergrunds im Meßspektrum verursacht. Der Beugungswinkel $\Theta_1$ am Vielschichtspiegel 4 ist deshalb so groß bzw. die Periodizitätslänge d so klein zu wählen, daß keine Totalreflexion der aus der Röhre austretenden Röntgenstrahlung stattfindet. Bei Verwendung eines etwa 0,5 mm dicken Be-Fensters 6 oder eines entsprechenden Filters kann man erreichen, daß der niederenergetische Anteil der in der Röhre erzeugten Röntgenstrahlung absorbiert bzw. deutlich geschwächt wird und nur Photonen mit Energien $E_T \geq 3$ keV bei einer Transmission T>0,14 in das Gehäuse 7 austreten. Um Totalreflexion am Vielschichtspiegel 4 für alle höheren Photonenenergien E > $E_T$ = 3 kev zu vermeiden, muß der Beugungswinkel $\Theta_1$ mindestens ein Grad betragen. Allgemein soll die Periodizitätslänge der Bedingung

EP 0 456 897 A1

$$d < \frac{\lambda_B}{\lambda_T} \cdot \frac{m}{2\sqrt{\tau_\epsilon \cdot N_A \cdot \bar{s}/2\pi}} \qquad (11)$$

genügen. Hierbei bezeichnet $\lambda_B$ die Wellenlänge, auf die der Braggreflex des Vielschichtspiegel abgestimmt werden soll (beispielsweise $\lambda_B$ = 0.071 nm für Mo-K$\alpha$ ), $\lambda_T$ = (hc)/E$_T$ die maximale Wellenlänge der nach Filterung aus der Röhre austretenden Strahlung, m die Beugungsordnung und $\bar{\rho}$ die mittlere Dichte des Vielschichtspiegels 4. Typische Periodizitätslängen liegen somit im Bereich zwischen 1 nm und 20 nm.

Ein gekrümmter Vielschichtspiegel 4 bietet die Möglichkeit, die von einem Punktfokus ausgehende Röntgenstrahlung 8 in einen linienförmigen Bereich auf der Probe 9 abzubilden. Bei Verwendung eines fokussierenden Vielschichtspiegels 4 muß man zwar einen Verlust an Strahlkollimation hinnehmen, gewinnt aber erheblich an Intensität. Darüberhinaus ergibt sich die Möglichkeit zur ortsaufgelösten TRFA, wenn man den Röntgenfokus mit Hilfe des Positioniertisches 18 bis 22 auf der Probe verschiebt.

Wird die Röntgenquelle nach dem aus der Optik bekannten Kondensorprinzip im Fokus des gekrümmten Vielschichtspiegels angeordnet, so erreicht man eine Kollimation der auf die Probe 9 einfallenden Strahlung. Ein derart konditionierter Strahl eignet sich insbesondere zur Bestimmung von Tiefenprofilen und Schichtdicken.

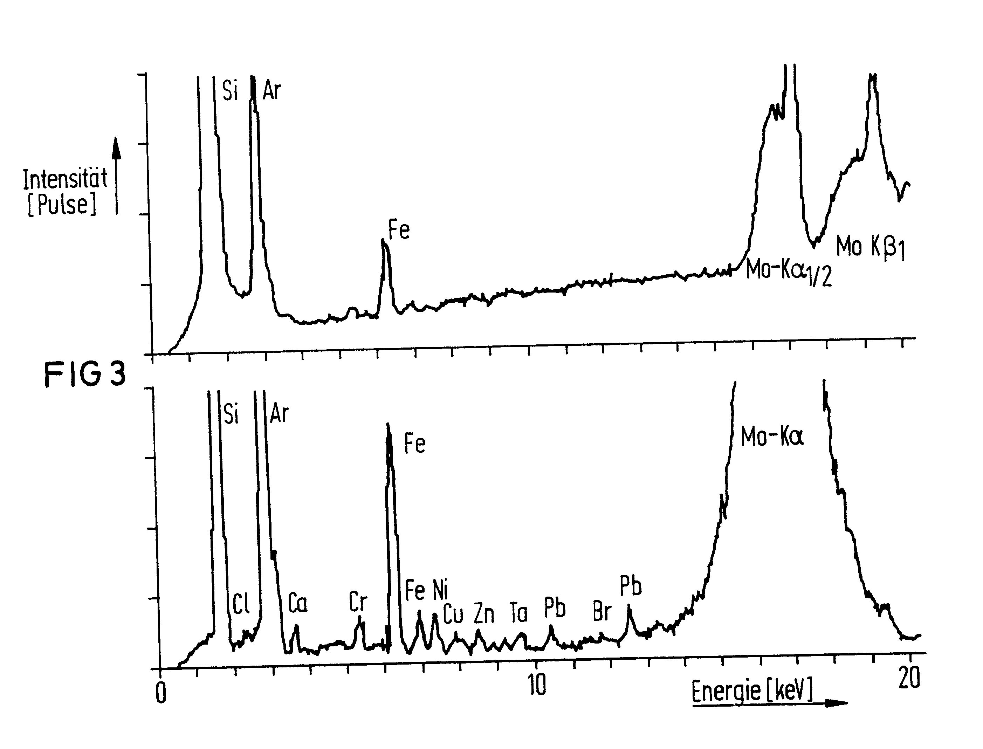

Wie der Vergleich der in Fig. 3 dargestellten Fluoreszenzspektren einer verunreinigten Si-Scheibe zeigt, liefert die mit einem Vielschichtspiegel ausgestattete Meßanordnung erheblich bessere Ergebnisse als eine bekannte Vorrichtung, in der die Probe ohne Zwischenschaltung eines Monochromators mit der in einer Mo-Röhre erzeugten Röntgenstrahlung beaufschlagt wurde. Während die auf der Siliziumscheibe vorhandenen Verunreinigungen im unteren Spektrum deutlich zutage treten, erkennt man im oberen TRFA-Spektrum nur die auf einem hohen Untergrund sitzende Eisenlinie. Aus dem unteren Spektrum konnte beispielsweise die Konzentration der Fe-Verunreinigung zu 2,5 x $10^{13}$ Atomen/cm$^2$ und die von Zn zu 9 x $10^{11}$ Atomen/cm$^2$ bestimmt werden.

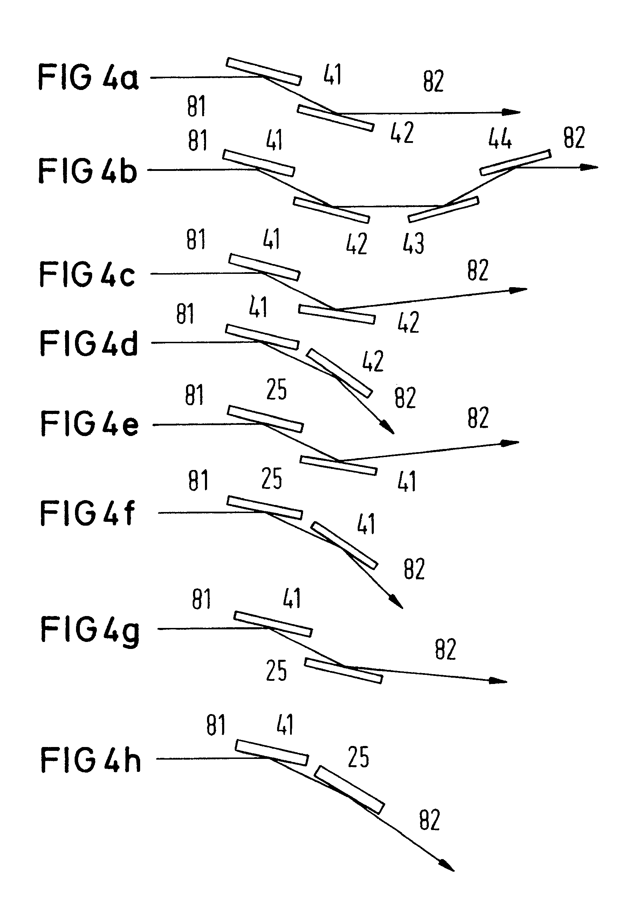

Wie die Fig. 4 zeigt, kann die Reflektoreinheit 4 auch aus mehreren Vielschichtspiegeln (s. Fig. 4a bis 4d) bzw. aus einer Kombination von Vielschichtspiegeln und einem Totalreflexionsspiegel 25 bestehen (s. Fig. 4e bis 4h). Die Verwendung von zwei Vielschichtspiegeln 41 und 42 bietet hierbei die Möglichkeit, den aus der Reflektoreinheit 4 austretenden Strahl 82 gegenüber dem in die Reflektoreinheit eintretenden Strahl 81 parallel zu versetzen (Fig. 4a). Eine Kombination aus vier Vielschichtspiegeln 41, 42, 43 und 44 erlaubt einen parallelen, unversetzten Strahlaustritt (Fig. 4b). Durch entsprechende Stellung der beiden Vielschichtspiegel 41 und 42 kann auch der austretende gegenüber dem einfallenden Strahl gekippt bzw. der einfallende Strahl 81 umgelenkt werden (s. Fig. c und d). Die Kombination eines Vielschichtspiegels 41 mit einem zweiten Vielschichtspiegel 42 oder einem Totalreflexionsspiegel 25 (s. Fig. 4e bis 4h) gestattet es, unerwünschte höhere Beugungsordnungen zu unterdrücken. Bei derartigen Anordnungen kommt auch ein anderes Schichtdickenverhältnis als $d_A:d_B$ = 1:1 in Betracht. Die in den Figuren 4c bis h dargestellten Reflektoreinheiten bieten den Vorteil, daß sie Bragg-Reflexionen in dritter Beugungsordnung verhindern, wodurch sich eine Beschränkung der Röhrenspannung erübrigt.

Die Erfindung ist selbstverständlich nicht auf die beschriebenen Ausführungsbeispiele beschränkt. So ist es ohne weiteres möglich, die Röhre durch eine andere Röntgenquelle zu ersetzen. Anstelle des Diodenarrays 17 können auch zwei Detektoren, beispielsweise Halbleiterdetektoren, zur Bestimmung des Einfallswinkels $\alpha$ verwendet werden.

10 Patentansprüche
4 Figuren


**Patentansprüche**


1.  Meßanordnung für die Röntgenfluoreszenzanalyse mit einer Röntgenstrahlung emittierenden Quelle (5), einer Reflektoreinheit (4) zur Umlenkung der Röntgenstrahlung (8) in Richtung einer auf einem Positioniertisch (18 bis 22) angeordneten Probe (9) und Mitteln (10, 11) zum Nachweis der durch die streifend auf die Probe (9) einfallende Röntgenstrahlung angeregte Fluoreszenzstrahlung (12)
    **dadurch gekennzeichnet,**
    daß die Reflektoreinheit (4) aus einer sich periodisch wiederholenden Folge von Schichten aus Materialien (A, B) mit unterschiedlichem Brechungsindex ($n_A$, $n_B$) besteht.


2.  Meßanordnung nach Anspruch 1,

6

**gekennzeichnet durch**

eine aus den Materialien $Mo/B_4C$, Re/Si, Re/C, W/Si, W/C, Ta/si W/Be, Mo/Be, Mo/Si, Mo/C, Ni/C, Au/C, AuPd/C, ReW/B, ReW/C, Al/Be oder V/C bestehende Schichtenfolge.

3. Meßanordnung nach Anspruch 1 oder 2,
   **dadurch gekennzeichnet,**
   daß die Schichten (A, B) dieselbe Dicke ($d_A = d_B$) aufweisen.

4. Meßanordnung nach einem der Ansprüche 1 bis 3,
   **dadurch gekennzeichnet,**
   daß die Periodizitätslänge d der Schichtenfolge der Bedingungen $1 \leq d \leq 20$ nm genügt.

5. Meßanordnung nach einem der Ansprüche 1 bis 4,
   **gekennzeichnet durch**
   eine bezüglich der Probe (9) und/oder der Quelle (5) ausrichtbare Reflektoreinheit (4).

6. Meßanordnung nach einem der Ansprüche 1 bis 5,
   **gekennzeichnet durch**
   eine gekrümmte Reflektoreinheit (4) zur Fokussierung, Kollimierung oder Parallelisierung der auf die Probe (9) einfallenden Röntgenstrahlung (8).

7. Meßanordnung nach einem der Ansprüche 1 bis 6,
   **dadurch gekennzeichnet,**
   daß im Strahlengang zwischen der Quelle (5) und der Probe (9) weitere Reflektoreinheiten (41, 42, 43, 44) angeordnet sind, wobei die weiteren Reflektoreinheiten aus Vielschichtspiegeln (41, 42, 43, 44) oder Totalreflexionsspiegeln (25) bestehen.

8. Meßanordnung nach einem der Ansprüche 1 bis 7,
   **gekennzeichnet durch**
   einen oder mehrere im Strahlengang des von der Probe (9) reflektierten und des unreflektierten Röntgenstrahls (23, 24) angeordnete Detektoren (17) zur Bestimmung des Einfallswinkels ( α ) der Röntgenstrahlung auf die Probe (9).

9. Meßanordnung nach einem der Ansprüche 1 bis 8,
   **dadurch gekennzeichnet,**
   daß die Quelle (5), die Reflektoreinheit (4), die Probe (9) und die Mittel (10, 11) zum Nachweis der Fluoreszenzstrahlung (12) oder Teile davon in einem evakuierbaren oder mit einem Gas füllbaren Gehäuse (7) angeordnet sind.

10. Meßanordnung nach einem der Ansprüche 1 bis 9,
    **gekennzeichnet durch**
    Mittel (22) zur elektrostatischen oder pneumatischen Halterung der Probe (9) auf dem Positioniertisch (18 bis 22).

## FIG 1

## FIG 2

FIG 3

EP 0 456 897 A1

FIG 4a

FIG 4b

FIG 4c

FIG 4d

FIG 4e

FIG 4f

FIG 4g

FIG 4h

**Europäisches Patentamt**

**EUROPÄISCHER RECHERCHENBERICHT**

Nummer der Anmeldung

**EP 90 12 3451**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-2 911 596 (GKSS-FORSCHUNGSZENTRUM GEESTHACHT)<br>* Seite 4, Absatz 1; Anspruch 1 *<br>— — — | 1-3,5,7,9 | G 01 N 23/223<br>G 21 K 1/06 |
| D,Y | AIP CONFERENCE PROCEEDINGS, Bd. 75, 24. Juni 1981, MONTEREY, Seiten 170-178; UNDERWOOD et al.: "Synthetic multilayers as bragg diffractors for X-rays and extreme ultraviolet: calculations of performance"<br>* Seite 170; Seite 174, rechte Spalte, Absatz 3; Seite 175, rechte Spalte, Absatz 4; Seite 176, linke Spalte, Absatz 1 *<br>— — — | 1-3,5,7,9 | |
| A | EP-A-0 224 245 (GKSS-FORSCHUNGSZENTRUM GEESTHACHT)<br>* Zusammenfassung; Anspruch 1; Abbildung 1 *<br>— — — | 1,6 | |
| A | REVUE DE PHYSIQUE APPLIQUEE, Bd. 23, Nr. 10, Oktober 1988, PARIS, FR; Seiten 1711-1726; NAMIOKA: "Current research activities in the field of multilayers for soft X-rays in Japan"<br>* Tabelle 1 *<br>— — — | 2 | |
| P,X | EP-A-0 372 278 (GKSS)<br>* Spalte 8, Zeilen 9-23; Ansprüche 19-21; Abbildung 1 *<br>— — — — — | 1,2,4 | **RECHERCHIERTE SACHGEBIETE (Int. Cl.5)**<br><br>G 01 N<br>G 21 K<br>G 02 B |

Der vorliegende Recherchenbericht wurde für alle Patentansprüche erstellt

| Recherchenort | Abschlußdatum der Recherche | Prüfer |
|---|---|---|
| Den Haag | 22 Juli 91 | KRAMETZ E.M. |